# EUROPEAN PATENT APPLICATION

(11) **EP 4 306 433 A1**
(43) Date of publication of application: **17.01.2024**
(21) Application number: 22184259.4
(22) Date of filing: 12.07.2022
(51) Int. Cl.: B64G 1/10, B64G 1/64

(54) **SPACECRAFT DOCKING SYSTEM AND METHOD**

(71) Applicant: ClearSpace SA, 1020 Renens (CH)
(72) Inventor: SCHEIDEGGER, Noémy, 3672 Oberdiessbach (CH); CRUCIS, Pierre, 31300 Toulouse (FR)
(74) Representative: ABREMA SA

(57) **Abstract**

There is described a spacecraft docking system (D) for and method of capturing and coupling a target spacecraft (T) to a servicing spacecraft (S) provided with the spacecraft docking system (D), the target spacecraft (T) having a propulsion engine, such as an apogee kick motor (AKM) or liquid apogee motor (LAM), with an exhaust nozzle (N) projecting away from the target spacecraft (T). The spacecraft docking system (D) includes outer and inner clamping devices (100, 300) configured to selectively cooperate with a portion of an exterior surface of the exhaust nozzle (N) and a portion of an interior surface of the exhaust nozzle (N), respectively, which outer and inner clamping devices (100, 300) are operable to jointly exert a clamping action on the exhaust nozzle (N) and establish a rigid connection between the servicing spacecraft (S) and the target spacecraft (T). The outer clamping device comprises a grappling mechanism (100) including a plurality of articulated phalange assemblies (10) that are distributed to enclose the exhaust nozzle (N) and that are selectively actuatable to be brought into an open configuration, allowing insertion of the exhaust nozzle (N) within operating range of the grappling mechanism (100), and a closed configuration, to perform closure of the grappling mechanism (100) onto the portion of the exterior surface of the exhaust nozzle (N).

## Description

### TECHNICAL FIELD

The present invention generally relates to a spacecraft docking system for and method of capturing and coupling a target spacecraft to a servicing spacecraft that is provided with the spacecraft docking system, the target spacecraft having a propulsion engine, such as an apogee kick motor (AKM) or liquid apogee motor (LAM), with an exhaust nozzle projecting away from the target spacecraft. More specifically, the invention relates to such a spacecraft docking system and method wherein the exhaust nozzle is exploited to dock the servicing spacecraft onto the target spacecraft.

### BACKGROUND OF THE INVENTION

Various spacecraft docking systems and methods are known in the art, including solutions that rely on a coupling with the exhaust nozzle of a propulsion engine of the target spacecraft.

U.S. Patent No. US 3,508,723 A discloses a method of securing an active spacecraft to a disabled spacecraft and recovering the same which essentially consists in (i) approaching the disabled spacecraft from the rear, (ii) inserting a securing device - or thruster probe - connected to the active spacecraft directly into the exhaust nozzle of the propulsion engine of the disabled spacecraft, through the throat and into the combustion chamber of the propulsion engine, and (iii) expanding the securing device laterally outward to secure the mechanism to the tapered inside surface of the throat of the propulsion engine.

Another similar solution is disclosed in U.S. Patent No. US 5,735,488 A, which solution makes use of inflatable bladders to align with and establish a rigid connection between the two spacecrafts.

International (PCT) Publication No. WO 2005/110847 A1 discloses a solution relying on the use of a thruster probe that in essence comprises a shaft that is slidingly received within a sleeve that is provided with a stop plate that is configured to engage with the interior surface of the exhaust nozzle. A plurality of articulated fingers is provided, which articulated fingers extend out of a free end of the shaft, inside and away from the leading end of the sleeve. Flexible tendons are further provided, which extend between the stop plate and the distal ends of the articulated fingers. This solution is designed in such a way that, when the shaft and leading end of the sleeve are driven into the exhaust nozzle of the propulsion engine of the target spacecraft, the stop plate engages the interior surface of the exhaust nozzle, causing stoppage of the sleeve and allowing relative movement of the shaft with respect to the sleeve. As a result, the free end of the shaft, including the articulated fingers and flexible tendons, penetrate through the throat of the propulsion engine, causing the flexible tendons to engage the throat and the articulated fingers to bend outward and latch onto the exhaust nozzle.

U.S. Patent No. US 6,969,920 B1 discloses a spacecraft docking mechanism that is capable of interfacing with a propulsion engine of a target spacecraft, namely, an apogee boost or kick motor (also referred to by the acronym ABM or AKM). The docking mechanism includes a compliant thruster probe with spring-loaded retaining fingers at its tip, which thruster probe is inserted into the exhaust nozzle of the ABM/AKM during the docking operation so that the probe tip is passed through and beyond the throat of the propulsion engine, into the combustion chamber. Upon penetrating into the combustion chamber, the spring-loaded retaining fingers are allowed to extend, thereby achieving capture. Rigidification of the connection between the servicing spacecraft and target spacecraft is ensured in part by retracting the thruster probe to pull the two spacecrafts together. The docking mechanism further comprises abutment pads which are designed to interface with the launcher interface ring of the target spacecraft and counteract the load applied by the probe retraction mechanism, thereby establishing and maintaining a rigid connection between the two spacecrafts. A probe release mechanism is further provided, which probe release mechanism includes a lanyard extending through the thruster probe and connected to the spring-loaded retaining fingers, as well as a pulley arrangement configured to allow retraction of the lanyard, and thus closure of the retaining fingers, thus allowing retraction of the thruster probe and release of the target spacecraft.

Further solutions relying on the use of a thruster probe are disclosed e.g. in U.S. Patents Nos. US 7,823,837 B2, US 7,861,975 B2, and International (PCT) Publications Nos. WO 2021/225701 and WO 2021/225702

Solutions relying on the use of a thruster probe to capture the target spacecraft have certain drawbacks and limitations. Especially, the docking sequence requires implementation of an accurate prepositioning of the servicing spacecraft relative to the target spacecraft to ensure that the thruster prober can adequately penetrate through the relatively narrow throat of the propulsion engine. Any misalignment is prone to causing failure of the capture operation, and thus abandonment of the docking operation, and/or damage the throat and combustion chamber of the propulsion engine. Reliability issues affecting retraction of the spring-loaded retaining fingers may furthermore irremediably prevent retraction of the thruster probe, and thus separation of the two spacecrafts.

Chinese Patent Publication No. CN 109483576 A discloses a spacecraft docking system for capturing and coupling a target spacecraft to a servicing spacecraft that is provided with the spacecraft docking system, the target spacecraft having a propulsion engine with an exhaust nozzle projecting away from the target spacecraft. The spacecraft docking system includes outer and inner clamping devices configured to selectively cooperate with a portion of an exterior surface and a portion of an interior surface of the exhaust nozzle, respectively, which outer and inner clamping devices are operable to jointly exert a clamping action on the exhaust nozzle and establish a rigid connection between the servicing spacecraft and the target spacecraft. According to CN 109483576 A, the outer clamping device in essence consists of a ring clamping arrangement with arc-shaped clamping parts that can be driven radially inward by means of a turntable mechanism to grip the exterior portion of the lower end section of the exhaust nozzle. The inner clamping device in essence consists of an extendable pusher mechanism with a pusher device that is movable between a retracted non-clamping position and an extended clamping position by means of a screw and nut actuating mechanism.

The solution disclosed in CN 109483576 A has limitations and drawbacks, most notably the fact that the docking system may create undesired torsion and deformation in the exhaust nozzle, which could jeopardize proper stiffness of the connection between the servicing spacecraft and target spacecraft.

There therefore remains a need for an improved solution.

### SUMMARY OF THE INVENTION

A general aim of the invention is to remedy the above-noted shortcomings of the prior art.

More precisely, an aim of the present invention is to provide a spacecraft docking system and method that can reliably establish a rigid connection between a servicing spacecraft and a target spacecraft via an exhaust nozzle of a propulsion engine of the target spacecraft, thereby achieving compatibility with any target spacecraft provided with such a propulsion engine.

A further aim of the invention is to provide such a solution that allows for an appropriate damping of relative motion between the servicing spacecraft and the target spacecraft during docking.

Another aim of the invention is to provide such a solution that allows for a soft capture of the target spacecraft to be carried out prior to establishing a rigid connection between the servicing spacecraft and the target spacecraft.

Yet another aim of the invention is to provide such a solution that is suited to repeatedly carry out docking and release sequences of the servicing spacecraft with target spacecrafts, moreover in a reliable manner.

A further aim of the invention is also to provide such a solution that ensures that the servicing spacecraft can be reliably released from the target spacecraft once the on-orbit servicing operation has been completed.

Another aim of the invention is to provide such a solution that exhibits great compactness and a low mass, and that is moreover cost-efficient to produce and operate, without compromising reliability.

These aims and others are achieved thanks to the solutions defined in the claims.

There is accordingly provided a spacecraft docking system, the features of which are recited in claim 1, namely, a spacecraft docking system for capturing and coupling a target spacecraft to a servicing spacecraft that is provided with the spacecraft docking system, the target spacecraft having a propulsion engine, such as an apogee kick motor (AKM) or liquid apogee motor (LAM), with an exhaust nozzle projecting away from the target spacecraft. The spacecraft docking system includes outer and inner clamping devices configured to selectively cooperate with a portion of an exterior surface of the exhaust nozzle and a portion of an interior surface of the exhaust nozzle, respectively, which outer and inner clamping devices are operable to jointly exert a clamping action on the exhaust nozzle and establish a rigid connection between the servicing spacecraft and the target spacecraft. According to the invention, the outer clamping device comprises a grappling mechanism including a plurality of articulated phalange assemblies that are distributed to enclose the exhaust nozzle and that are selectively actuatable to be brought into an open configuration, allowing insertion of the exhaust nozzle within operating range of the grappling mechanism, and a closed configuration, to perform closure of the grappling mechanism onto the portion of the exterior surface of the exhaust nozzle.

By way of preference, each articulated phalange assembly includes at least one phalange member with a contact pad configured to contact the exterior surface of the exhaust nozzle. In this context, each phalange assembly may further include an actuator allowing independent actuation of each phalange member. By way of preference, the phalange member is supported onto a support member so as to pivot about a pivoting joint. Advantageously, each contact pad may especially be provided with a sensor (such as a contact, distance or force sensor) to detect contact between the contact pad and the exterior surface of the exhaust nozzle and allow control of the force applied by each phalange member onto the exterior surface of the exhaust nozzle.

The grappling mechanism may comprise a damping structure to damp relative motion between the servicing spacecraft and the target spacecraft during docking. Such damping structure could be integrated directly within the structure of each contact pad and/or be embodied as damping devices within the articulation of each phalange assembly, such as by means of suitable rotary dampers provided at the pivoting joint between each phalange member and associated support member.

Measures can furthermore be taken to configure the spacecraft docking system to ensure protection against electrostatic discharge (ESD).

In accordance with a particularly preferred embodiment, the grappling mechanism comprises one or more proximity sensors, such as distance sensors, to detect presence of the exhaust nozzle within operating range of the grappling mechanism and trigger closure of the grappling mechanism onto the exhaust nozzle. The one or more proximity sensors may advantageously be provided on one or more, in particular each, of the aforementioned phalange members.

By way of preference, the inner clamping device comprises an extendable pusher mechanism configured to selectively cooperate with a portion of the interior surface of the exhaust nozzle, which extendable pusher mechanism includes a pusher device that is movable between a retracted non-clamping position and an extended clamping position projecting inside the exhaust nozzle. In this context, the pusher device may in particular comprise a bearing element mounted on an extensible member, which bearing element includes a support collar that is configured to be brought into contact with the portion of the interior surface of the exhaust nozzle to exert the clamping action on the exhaust nozzle. The bearing element may especially be configured to form-fit with the interior surface of the exhaust nozzle to adapt to the inner shape of the exhaust nozzle.

In accordance with a particularly preferred embodiment of the invention, the grappling mechanism is configured to perform a soft capture of the target spacecraft upon closure of the grappling mechanism, and the aforementioned pusher device is controllable to be brought from the retracted non-clamping position to the extended clamping position to exert the clamping action on the exhaust nozzle only after soft capture of the target spacecraft by means of the grappling mechanism.

The extendable pusher mechanism can moreover be configured and be operable to exert a pushing impulse against the exhaust nozzle following release of the clamping action, which is particularly useful in performing a controlled release of the target spacecraft from the servicing spacecraft.

By way of preference, the outer and inner clamping devices are configured to jointly clamp a section of the exhaust nozzle downstream of and proximate to a throat of the propulsion engine, which ensures a reliable and robust, rigid connection between the servicing spacecraft and the target spacecraft.

Also claimed is a method of capturing and coupling a target spacecraft to a servicing spacecraft, the features of which are recited in independent claim 11, namely, such a method wherein the target spacecraft has a propulsion engine, such as an apogee kick motor (AKM) or liquid apogee motor (LAM), with an exhaust nozzle projecting away from the target spacecraft, the method comprising the following steps:
- providing the servicing spacecraft with a spacecraft docking system in accordance with the invention;
- manoeuvring the servicing spacecraft to perform a rendezvous with the target spacecraft;
- positioning the servicing spacecraft relative to the target spacecraft to bring the exhaust nozzle within operating range of the grappling mechanism;
- actuating the grappling mechanism to close onto the portion of the exterior surface of the exhaust nozzle; and
- actuating the inner clamping device to bring the inner clamping device into contact with the portion of the interior surface of the exhaust nozzle, and thereby exert a clamping action on the exhaust nozzle to establish a rigid connection between the servicing spacecraft and the target spacecraft.

By way of preference, the spacecraft docking system is a spacecraft docking system as mentioned above wherein the grappling mechanism is configured to perform a soft capture of the target spacecraft upon closure of the grappling mechanism, and wherein the aforementioned pusher device is controllable to be brought from the retracted non-clamping position to the extended clamping position to exert the clamping action on the exhaust nozzle only after soft capture of the target spacecraft by means of the grappling mechanism. In such case, docking of the servicing spacecraft onto the target spacecraft is carried out in accordance with the following docking sequence:
(i) positioning the servicing spacecraft relative to the target spacecraft to insert the exhaust nozzle within operating range of the grappling mechanism;
(ii) actuating the grappling mechanism to bring the articulated phalange assemblies to the closed configuration and perform closure of the grappling mechanism onto the portion of the exterior surface of the exhaust nozzle, resulting in a soft capture of the target spacecraft; and
(iii) actuating the extendable pusher mechanism to bring the pusher device to the extended clamping position and exert the clamping action on the exhaust nozzle, thereby establishing the rigid connection between the servicing spacecraft and the target spacecraft.

Preferably, the spacecraft docking system is a spacecraft docking system as mentioned above wherein each articulated phalange assembly includes a phalange member with a contact pad configured to contact the exterior surface of the exhaust nozzle. In such case, one or more, in particular each, of the phalange members comprises at least one proximity sensor to detect presence of the exhaust nozzle within operating range of the grappling mechanism and trigger closure of the grappling mechanism onto the exhaust nozzle. Furthermore, the method further comprises, prior to bringing the exhaust nozzle within operating range of the grappling mechanism, pre-actuating the articulated phalange assemblies to bring the phalange members to an intermediate position to position each proximity sensor to monitor insertion of the exhaust nozzle within operating range of the grappling mechanism.

In accordance with another embodiment of the invention, the spacecraft docking system is a spacecraft docking system as mentioned above wherein each contact pad is provided with a sensor (such as a contact, distance or force sensor) to detect contact between the contact pad and the exterior surface of the exhaust nozzle and allow control of the force applied by each phalange member onto the exterior surface of the exhaust nozzle. In such case, actuation of the articulated phalange assemblies includes sensing the force applied by each phalange member onto the exterior surface of the exhaust nozzle and stopping closing motion of the phalange members to prevent the application of excessive force onto the exterior surface of the exhaust nozzle.

Lastly, in accordance with a particularly preferred embodiment, the method further comprises release of the servicing spacecraft from the target spacecraft subsequent to docking thereof and the spacecraft docking system is a spacecraft docking system as mentioned above wherein the extendable pusher mechanism is configured and operable to exert a pushing impulse against the exhaust nozzle following release of the clamping action by the grappling mechanism. In such case, release of the servicing spacecraft from the target spacecraft is carried out in accordance with the following release sequence:
(i) actuating the grappling mechanism to bring the articulated phalange assemblies to the open configuration and release the clamping action on the exhaust nozzle;
(ii) operating the extendable pusher mechanism to briefly extend the pusher device beyond the extended clamping position to exert a pushing impulse against the exhaust nozzle and cause separation of the servicing spacecraft and target spacecraft; and
(iii) retracting the pusher device to the retracted non-clamping position.

Further advantageous embodiments of the invention form the subjectmatter of the dependent claims and are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 is a schematic perspective view of a spacecraft docking system with outer and inner clamping devices in accordance with a preferred embodiment of the invention, which spacecraft docking system is provided on a servicing spacecraft (partly visible) and shown in a fully retracted configuration;
Figure 1A is a schematic perspective view of part of the servicing spacecraft of Figure 1 and of a target spacecraft, in an undocked configuration, the spacecraft docking system being shown in an intermediate configuration prior to interaction, capture and docking with the exhaust nozzle of a propulsion engine of the target spacecraft;
Figure 1B is a schematic perspective view of a cross-section of part of the servicing spacecraft and part of the target spacecraft of Figure 1A, showing the outer clamping device in an open configuration and the inner clamping device in a fully retracted position;
Figures 2A to 2E are illustrative of various stages of a preferred docking sequence between the servicing spacecraft and target spacecraft using the spacecraft docking system of Figures 1 and 1A-B; and
Figures 3A to 3C are illustrative of various stages of a preferred release sequence to separate the servicing spacecraft from the target spacecraft using the spacecraft docking system of Figures 1 and 1A-B.

### DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as reflected in the appended claims.

As described herein, when two or more parts or components are described as being connected, attached, secured or coupled to one another, they can be so connected, attached, secured or coupled directly to each other or through one or more intermediary parts.

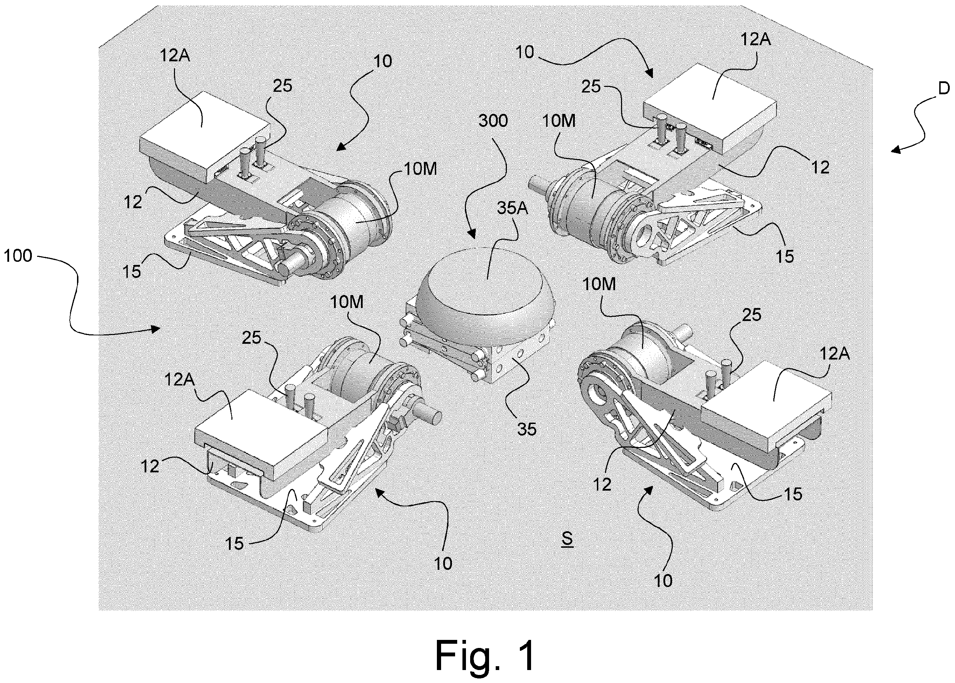

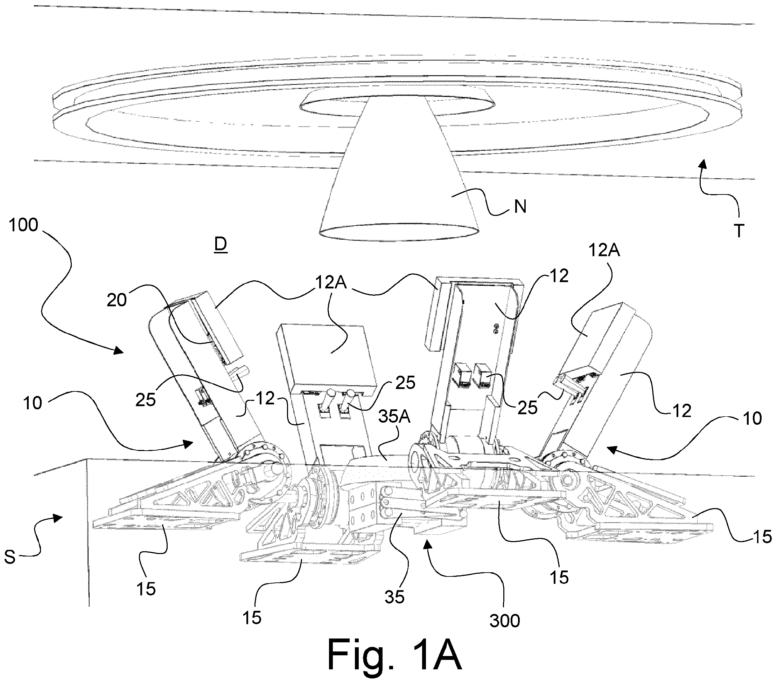

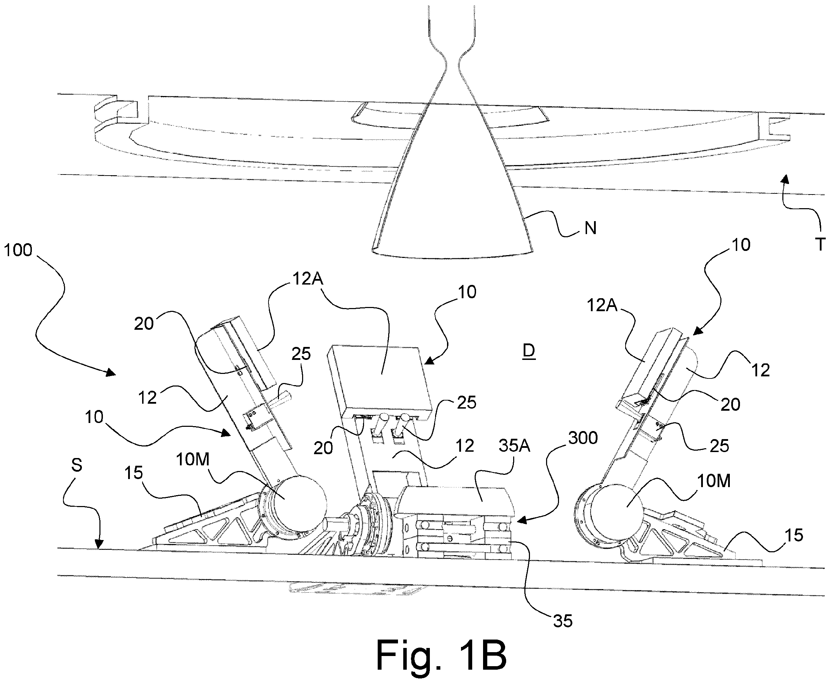

Figure 1 is illustrative of a spacecraft docking system, generally designated by reference sign D, in accordance with a preferred embodiment of the invention, which spacecraft docking system D is provided on a servicing spacecraft S (partly visible in Figure 1). The spacecraft docking system D is depicted in Figure 1 in a fully retracted configuration and is configured to selectively cooperate with the exhaust nozzle (not shown in Figure 1) of a propulsion engine of a target spacecraft, as detailed hereafter. Figures 1A and 1B show part of the servicing spacecraft S and of a target spacecraft T, in an undocked configuration, following a rendezvous between the two spacecrafts. The servicing spacecraft S may be designed to carry out a variety of on-orbit servicing operations, including but not limited to orbital manoeuvres to bring the target spacecraft T to a different orbital position, such as a graveyard orbit remote from operational orbits or for passive and/or active deorbiting of the target spacecraft T. Other on-orbit servicing operations could be contemplated including e.g. refuelling operations using dedicated refuelling mechanisms or other maintenance operations aimed at extending the operational lifecycle of the target spacecraft T.

As shown in Figures 1A and 1B, the target spacecraft T is provided with a propulsion engine, such as an apogee kick motor (AKM) or liquid apogee motor (LAM), exhibiting an exhaust nozzle N that projects away from the target spacecraft T. In the context of the invention, the exhaust nozzle N is used by the servicing spacecraft S as a mean to perform a capture of and docking to the target spacecraft T. To this end, the servicing spacecraft is provided with the aforementioned spacecraft docking system D. Also visible in Figures 1A and 1B is an interface ring adapter provided in the area surrounding the exhaust nozzle N. This interface ring adapter is not specifically exploited for carrying out docking operations with the servicing spacecraft S using the spacecraft docking system D, but an interaction with the interface ring adapter could potentially be contemplated if such interaction were to be required.

The spacecraft docking system D in essence includes an outer clamping device 100 and an inner clamping device 300 that are configured to selectively cooperate with a portion of an exterior surface of the exhaust nozzle N and a portion of an interior surface of the exhaust nozzle N, respectively. The outer and inner clamping devices 100, 300 are operable to jointly exert a clamping action on the exhaust nozzle N and establish a rigid connection between the servicing spacecraft S and the target spacecraft T.

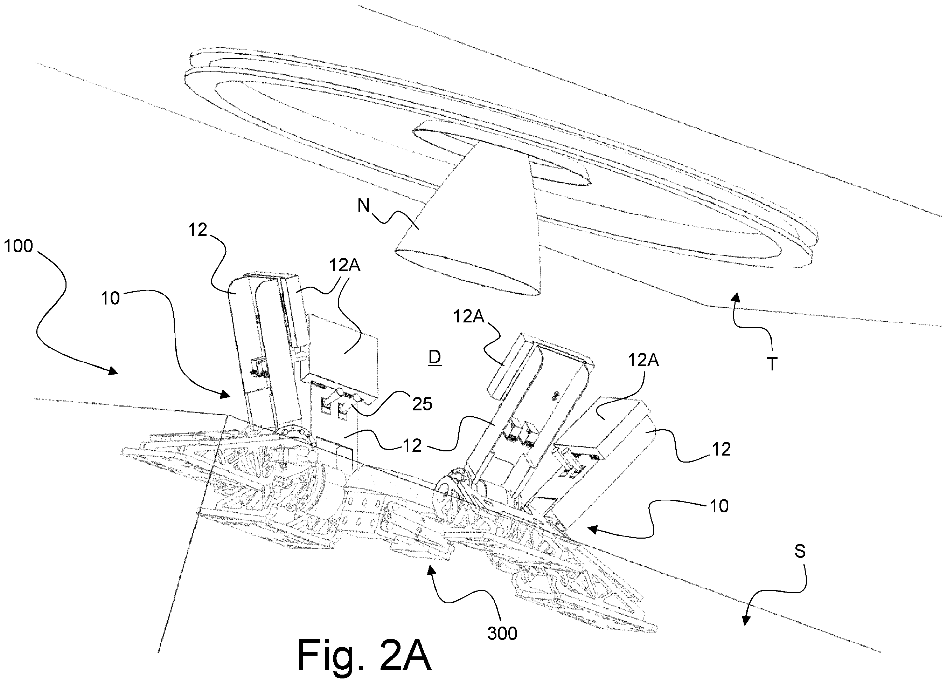

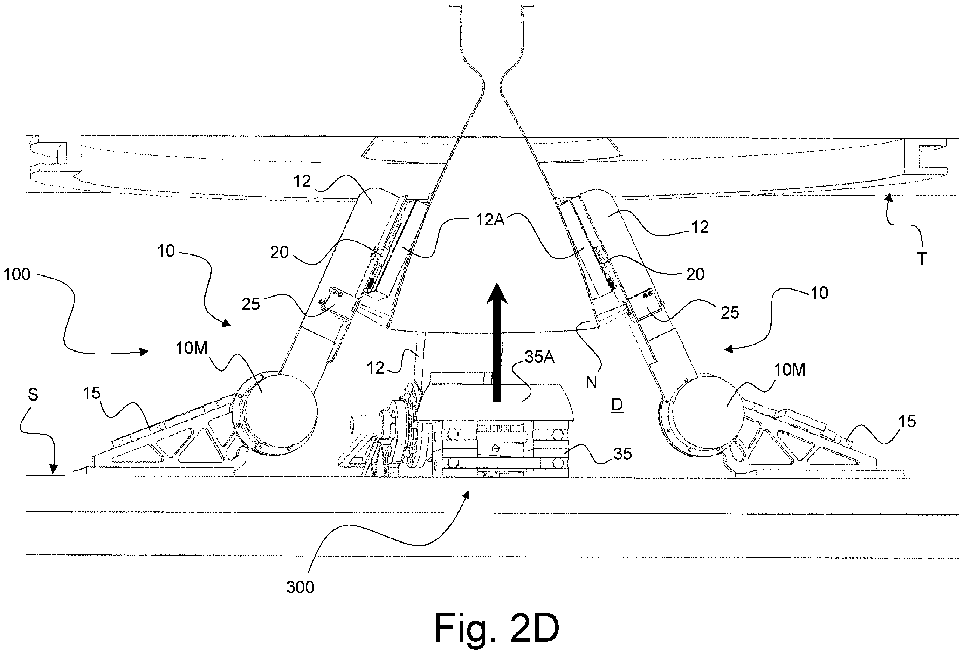

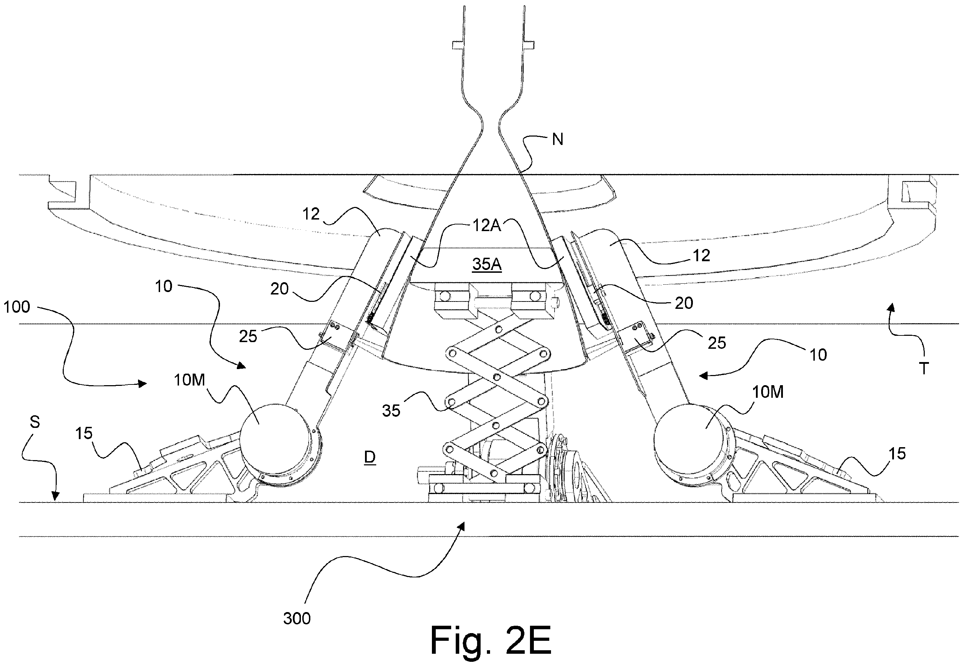

More specifically, in accordance with the present invention, the outer clamping device comprises a grappling mechanism 100 including a plurality of (here four) articulated phalange assemblies 10 that are distributed to enclose the exhaust nozzle N and that are selectively actuatable to be brought into an open configuration (as shown in Figures 1A and 1B), allowing insertion of the exhaust nozzle N within operating range of the grappling mechanism 100 (see also Figures 2A to 2C), and a closed configuration (see Figures 2D and 2E), to perform closure of the grappling mechanism 100 onto the portion of the exterior surface of the exhaust nozzle N.

In the illustrated embodiment, each articulated phalange assembly 10 includes a phalange member 12 with a contact pad 12A configured to contact the exterior surface of the exhaust nozzle N, which phalange member 12 is pivotably supported onto a support member 15 via a pivoting joint. More than one phalange member could however be contemplated, in which case the phalange member 12 would be articulated onto at least one intermediate phalange member supported by the support member 15. The contact pad 12A may advantageously be made of or comprise a shape memory material (such as a foam) that can revert back to its initial/default shape following release of the exhaust nozzle N.

By way of preference, each phalange assembly 10 further includes a suitable actuator 10M allowing independent actuation of each phalange member 12 about the pivoting joint. This actuator 10M can in particular be a rotatable actuator positioned at the pivoting joint between the support member 15 and the phalange member 12.

In the illustrated example, each contact pad 12A is further provided with a sensor 20 (such as a force sensor or any other suitable sensor capable of sensing or measuring contact, be it directly or indirectly) - see Figures 1A-B - to detect contact between the contact pad 12A and the exterior surface of the exhaust nozzle N and allow control of the force applied by each phalange member 12 onto the exterior surface of the exhaust nozzle N. One will appreciate that such arrangement, combined with the use of independent actuators 10M, advantageously allows for a suitable control of each phalange assembly 10 to prevent the application of excessive force by the grappling mechanism 100 onto the exterior surface of the exhaust nozzle N, as further discussed below.

Also visible in Figures 1 and 1A-B is the presence of multiple proximity sensors 25 (such as distance sensors) to detect presence of the exhaust nozzle N within operating range of the grappling mechanism 100. In the illustrated example, each phalange assembly 10 is provided with a pair of such proximity sensors 25, which proximity sensors 25 are in effect positioned on a midsection of each phalange member 12 in such a way as to be oriented towards a centreline of the spacecraft docking system D.

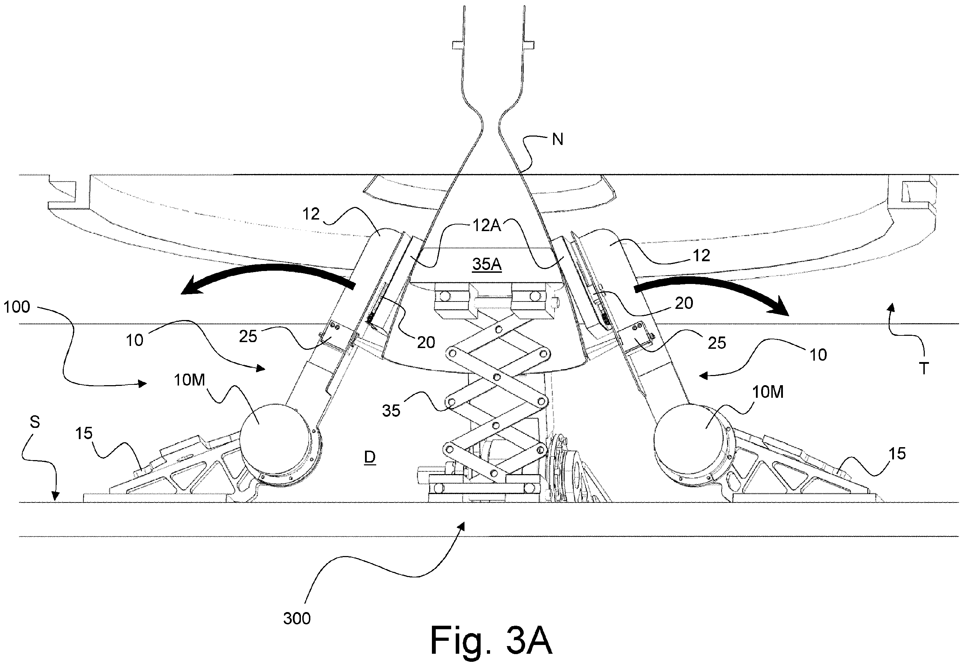

In the illustrated example, the inner clamping device preferably comprises an extendable pusher mechanism 300 configured to selectively cooperate with a portion of the interior surface of the exhaust nozzle N. More specifically, the extendable pusher mechanism 300 includes a pusher device 35/35A that is movable between a retracted non-clamping position (as shown e.g. in Figures 1, 1A-B and 2A to 2D) and an extended clamping position projecting inside the exhaust nozzle N (as shown e.g. in Figures 2E and 3A).

Different types of extendable pusher mechanisms could be contemplated within the scope of the present invention. In the illustrated example, the pusher device 35/35A comprises a bearing element mounted on an extensible member 35, which bearing element includes a support collar 35A that is configured to be brought into contact with the portion of the interior surface of the exhaust nozzle N to exert the clamping action on the exhaust nozzle (as shown in Figures 2E and 3A). The bearing element may especially be configured to form-fit with the interior surface of the exhaust nozzle N to adapt to the inner shape of the exhaust nozzle N. The extensible member 35 makes use of an articulated scissor structure that is linearly extensible or retractable using an associated actuator (not shown), leading to a particularly compact arrangement. Other extensible mechanisms could however be contemplated, including e.g. telescopic shafts, spindle based mechanisms, or any other type of deployable structures.

The grappling mechanism 100 may advantageously comprise a damping structure to damp relative motion between the servicing spacecraft S and the target spacecraft T during docking. In that regard, suitable damping structures are preferably integrated directly within the structure of each contact pad 12A. Alternatively or in addition thereto, suitable damping devices could be embodied within the articulation of each phalange assembly 10. In this latter context, suitable rotary dampers may especially be provided at the pivoting joint between each phalange member 12 and associated support member 15.

The spacecraft docking system D may furthermore be configured to ensure protection against electrostatic discharge (ESD). ESD protection measures are already known as such in the art, and such ESD protection measures ensure that the servicing spacecraft S can suitably handle and withstand differences in electric potential (including differences of 20 kV or more) with the target spacecraft T at the time of first contact between the two spacecrafts. It is worth noting in that regard that the grappling mechanism 100 is in effect the first element to be brought in contact with the target spacecraft T, namely, with the exhaust nozzle N, and that ESD protection measures shall in particular be taken in respect of the grappling mechanism 100, but that similar ESD protection measures may further be taken in respect of the inner clamping device 300.

In accordance with a particularly preferred embodiment of the invention (as more specifically illustrated by Figures 2A to 2E), the grappling mechanism 100 is configured to perform a soft capture of the target spacecraft T upon closure of the grappling mechanism 100, and the pusher device 35/35A is controllable to be brought from the retracted non-clamping position to the extended clamping position to exert the clamping action on the exhaust nozzle N only after soft capture of the target spacecraft T by means of the grappling mechanism 100.

As a preferred refinement, the extendable pusher mechanism 300 is further configured and operable to exert a pushing impulse against the exhaust nozzle N following release of the clamping action, namely, by allowing the pusher device 35/35A to briefly extend beyond the extended clamping position, which is particularly useful in ensuring a controlled release of the target spacecraft T.

A preferred docking sequence is shown by Figures 2A to 2E. Prior to a capture attempt, the spacecraft docking system D is brought to the configuration shown in Figure 2A, grappling mechanism 100 in an open configuration and pusher device 35/35A in the retracted non-clamping position. Prior to taking the configuration shown in Figure 2A, the grappling mechanism 100 could be configured to take a standby configuration, as shown in Figure 1, with the phalange members 12 pivoted fully on their back onto the support members 15.

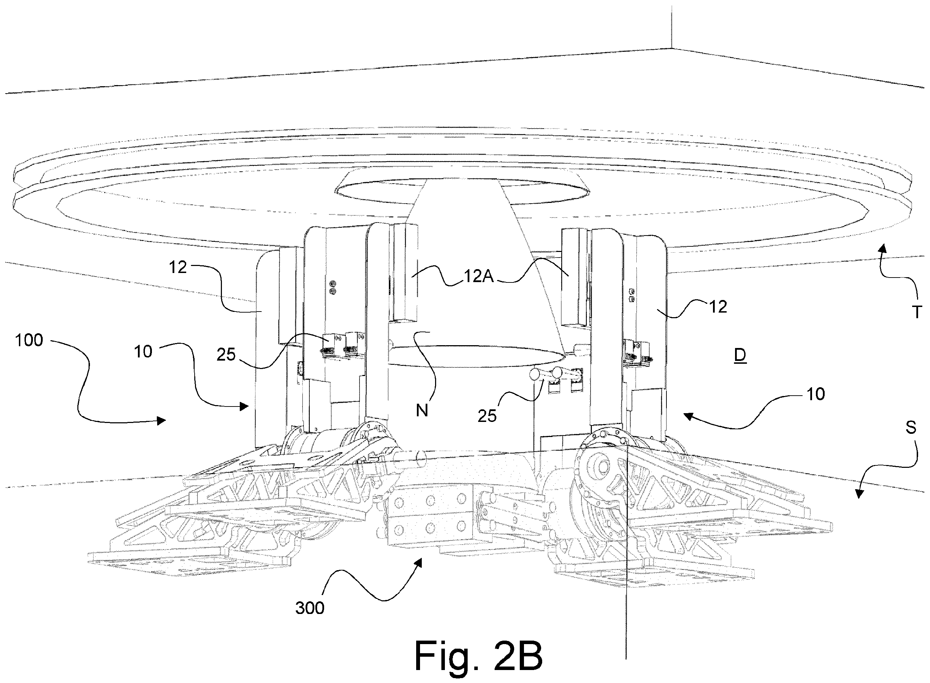

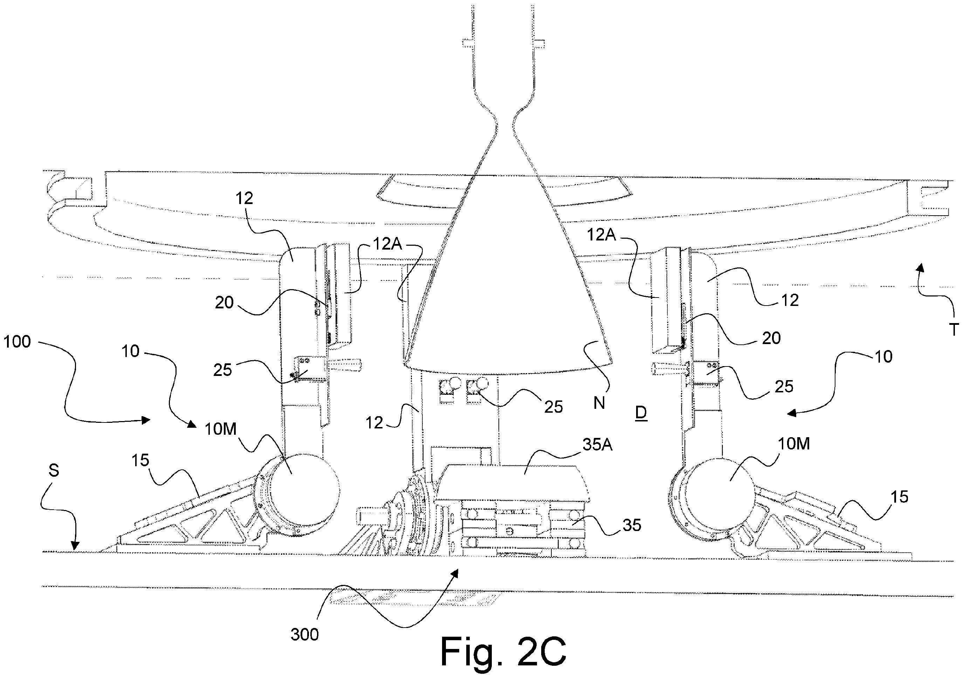

Preferably, prior to insertion of the exhaust nozzle N within operating range of the grappling mechanism 100, the articulated phalange assembles 10 are preactuated to bring the phalange members 12 to an intermediate position (here a substantially upright position as shown in Figures 2B and 2C) to adequately position each proximity sensor 25 to monitor insertion of the exhaust nozzle N within operating range of the grappling mechanism 100. In the illustrations of Figures 2B and 2C, one may note that, as a result of this pre-actuation, the proximity sensors 25 are oriented towards a centreline of the spacecraft docking system D, namely, to ensure that such centreline can be aligned with the longitudinal axis of the exhaust nozzle N (namely, the axis of revolution thereof). In this way, the proximity sensors 25 can successfully detect insertion of the leading edge of the exhaust nozzle N and sense the distance separating the exhaust nozzle N from each phalange assembly 10. Corresponding positional adjustments to the attitude of the servicing spacecraft S with respect to the target spacecraft T may be carried out to ensure that the centreline of the spacecraft docking system D is perfectly aligned with the longitudinal axis of the exhaust nozzle N during insertion. Once the relevant distance separating the exhaust nozzle N from each phalange assembly 10, as detected by the proximity sensors 25, falls within the desired range, closure of the grappling mechanism 100 may be triggered.

Triggering of the closure of the grappling mechanism 100 may be controlled by alternate or supplemental means, including e.g. further (proximity or contact) sensors positioned to detect the position of the leading edge of the exhaust nozzle N, which further sensors may be positioned directly at the base of the spacecraft docking system D.

Any adequate sensory arrangement could be provided within the scope of the invention, as long as such sensory arrangement allows to reliably monitor insertion of the exhaust nozzle N within the operating range of the grappling mechanism 100 and trigger closure of the grappling mechanism 100 at the appropriate time.

Upon closure of the grappling mechanism 100, as shown in Figure 2D, the contact pads 12A are brought in contact with the exterior surface of the exhaust nozzle N. Thanks to the provision of force sensors 20, the force applied by each phalange member 12 can be appropriately sensed to stop closure of the associated phalange assembly 10 and prevent excessive force from being applied onto the exhaust nozzle N.

As a result of closure of the grappling mechanism 100 around the exhaust nozzle N, a soft capture of the target spacecraft T is in effect achieved, with the target spacecraft T being unable to escape the capture volume of the grappling mechanism 100 unless the phalange assemblies 10 are opened again to release the target spacecraft T. During that time, most if not all of the relative motion between the two spacecrafts can be eliminated to ensure stability of the soft capture.

Once soft capture has been successfully achieved by means of the grappling mechanism 100, the extendable pusher mechanism 300 can be actuated to bring it into contact with the portion of the interior surface of the exhaust nozzle N to establish a rigid connection between the servicing spacecraft S and the target spacecraft T. This is achieved, in the illustrated example, by actuating the extendable pusher mechanism 300 to bring the pusher device 35/35A to the extended clamping position (as shown in Figure 2E) and exert the clamping action on the exhaust nozzle N, thereby establishing the rigid connection between the servicing spacecraft S and the target spacecraft T.

As can be appreciated from looking at Figure 2E especially, the grappling mechanism 100 and extendable pusher mechanism 300 acting as outer and inner clamping devices, respectively, are advantageously configured to jointly clamp the exhaust nozzle N on both sides, downstream of and proximate to the throat of the propulsion engine (which throat is schematically depicted in Figures 1B, 2C-2E, 3A and 3B). No torsion or deformation, or other undesired effect, is thus induced or generated, which guarantees a robust and reliable stiffness of the connection between the servicing spacecraft S and the target spacecraft T.

A preferred release sequence is shown by Figures 3A to 3C. This preferred release sequence is particularly preferred in that it allows for a controlled release of the target spacecraft T from the servicing spacecraft S.

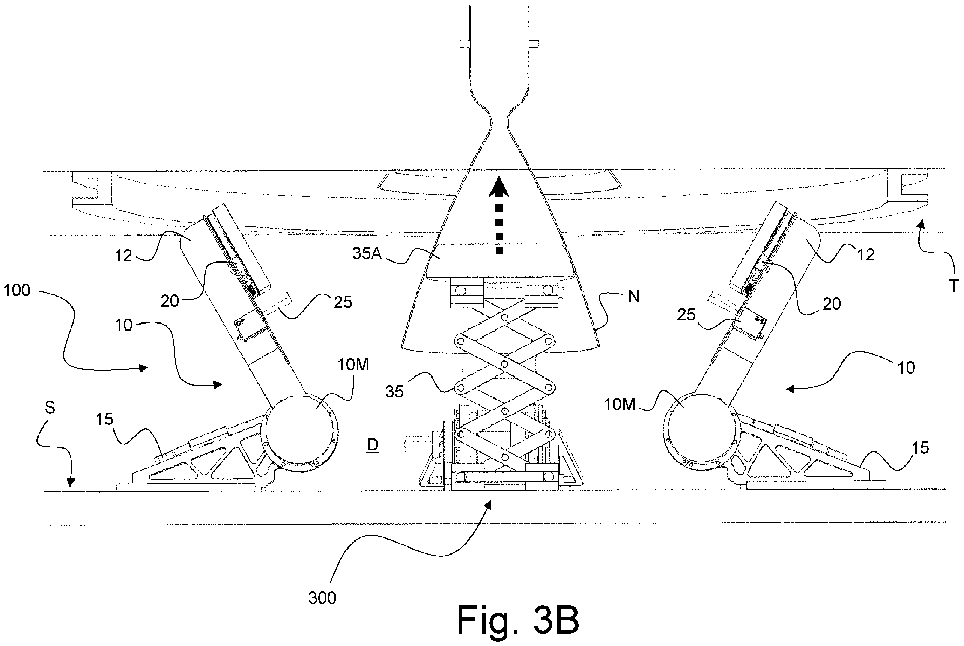

More specifically, from the configuration shown in Figure 3A, which in essence corresponds to the fully clamped configuration that is also depicted in Figure 2E, the grappling mechanism 100 is actuated to bring the articulated phalange assemblies 10 back to the open configuration, as shown in Figure 3B, thereby releasing the clamping action on the exhaust nozzle N.

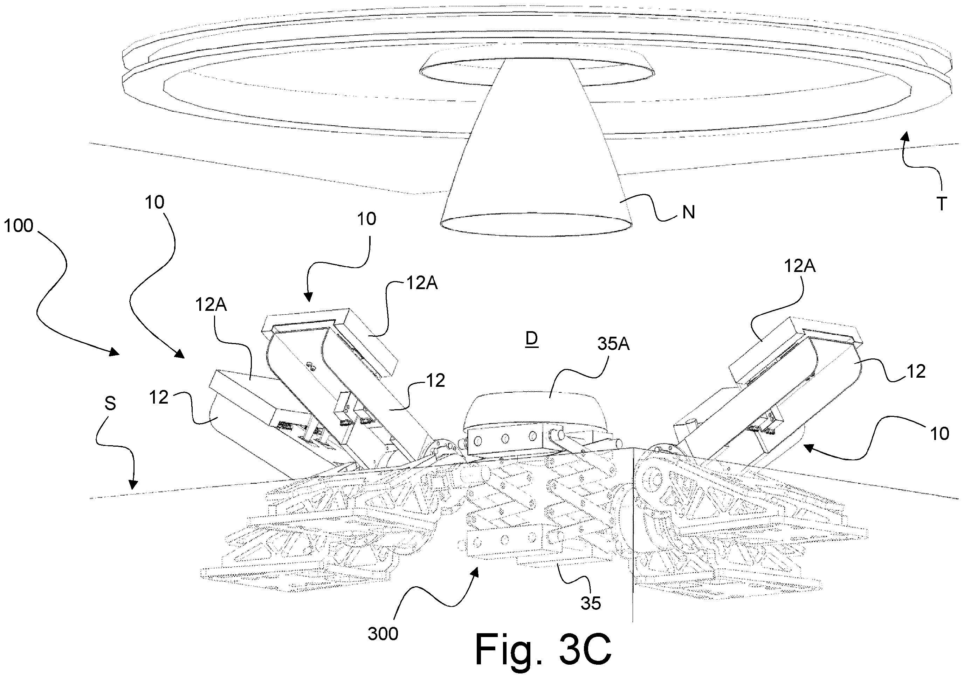

Once the articulated phalange assemblies 10 have freed the path for the extraction of the exhaust nozzle, the extendable pusher mechanism 300 is operated to briefly extend the pusher device 35/35A beyond the extended position shown in Figure 3B to exert a pushing impulse against the exhaust nozzle N, thus causing a controlled separation of the servicing spacecraft S and target spacecraft T:
Following separation of the two spacecrafts, as depicted in Figure 3C, the pusher device 35/35A can be moved back to the retracted non-clamping position, reverting back to the start configuration of the spacecraft docking system D ready to perform further docking with another target spacecraft T.

Various modifications and/or improvements may be made to the above-described embodiments without departing from the scope of the invention as defined by the appended claims.

For instance, while not specifically shown, additional mechanisms could potentially be provided to further improve or help establishing the rigid connection between the servicing spacecraft and the target spacecraft. In particular, while no specific interaction with e.g. the interface ring adapter typically found on spacecrafts is necessary, such additional interaction may potentially be contemplated, if desired.

Furthermore, while the grappling mechanism shown in Figures 1 and 1A-B to 3A-C comprises four articulated phalange assemblies, any number of phalange assemblies could be contemplated. Three articulated phalange assemblies could for instance be contemplated, or more than four should this be desired.

In addition, while the illustrated phalange assembles each include a single, pivotably-supported phalange member, the articulated phalange assemblies could potentially be designed to include two or more articulated phalange members.

### LIST OF REFERENCE NUMERALS AND SIGNS USED THEREIN

- S: servicing spacecraft
- D: spacecraft docking system provided on e.g. front face of servicing spacecraft S
- T: target spacecraft
- N: exhaust nozzle of propulsion engine of target spacecraft T
- 100: grappling mechanism (outer clamping device)
- 10: articulated phalange assemblies
- 10M: actuator for independent control of pivoting movement of phalange member 12 about pivoting joint
- 12: phalange member of articulated phalange assembly 10 (pivotable about pivoting joint with support member 15)
- 12A: contact pad
- 15: support member of articulated phalange assembly 10 (supporting phalange member 12 - and associated actuator 10M - for pivoting movement about pivoting joint)
- 20: sensors for detecting contact between contact pad 12A and exterior surface of exhaust nozzle N (e.g. force sensors)
- 25: proximity sensors (e.g. distance sensors)
- 300: extendable pusher mechanism (inner clamping device)
- 35: extensible member (part of pusher device)
- 35A: support collar (bearing element - part of pusher device)

## Claims

1. A spacecraft docking system (D) for capturing and coupling a target spacecraft (T) to a servicing spacecraft (S) that is provided with the spacecraft docking system (D), the target spacecraft (T) having a propulsion engine, such as an apogee kick motor (AKM) or liquid apogee motor (LAM), with an exhaust nozzle (N) projecting away from the target spacecraft (T),
wherein the spacecraft docking system (D) includes outer and inner clamping devices (100, 300) configured to selectively cooperate with a portion of an exterior surface of the exhaust nozzle (N) and a portion of an interior surface of the exhaust nozzle (N), respectively, which outer and inner clamping devices (100, 300) are operable to jointly exert a clamping action on the exhaust nozzle (N) and establish a rigid connection between the servicing spacecraft (S) and the target spacecraft (T),
**characterized in that** the outer clamping device comprises a grappling mechanism (100) including a plurality of articulated phalange assemblies (10) that are distributed to enclose the exhaust nozzle (N) and that are selectively actuatable to be brought into an open configuration, allowing insertion of the exhaust nozzle (N) within operating range of the grappling mechanism (100), and a closed configuration, to perform closure of the grappling mechanism (100) onto the portion of the exterior surface of the exhaust nozzle (N).

2. The spacecraft docking system (D) according to claim 1, wherein each articulated phalange assembly (10) includes at least one phalange member (12) with a contact pad (12A) configured to contact the exterior surface of the exhaust nozzle (N),
wherein each phalange assembly (10) preferably further includes an actuator (10M) allowing independent actuation of each phalange member (12),
and wherein the phalange member (12) is preferably supported onto a support member (15) so as to pivot about a pivoting joint.

3. The spacecraft docking system (D) according to claim 2, wherein each contact pad (12A) is provided with a sensor (20), such as a contact, distance or force sensor, to detect contact between the contact pad (12A) and the exterior surface of the exhaust nozzle (N) and allow control of the force applied by each phalange member (12) onto the exterior surface of the exhaust nozzle (N).

4. The spacecraft docking system (D) according to any one of the preceding claims, wherein the grappling mechanism (100) comprises a damping structure to damp relative motion between the servicing spacecraft (S) and the target spacecraft (T) during docking.

5. The spacecraft docking system (D) according to any one of the preceding claims, wherein the spacecraft docking system (D) is configured to ensure protection against electrostatic discharge (ESD).

6. The spacecraft docking system (D) according to any one of the preceding claims, wherein the grappling mechanism (100) comprises one or more proximity sensors (25), such as distance sensors, to detect presence of the exhaust nozzle (N) within operating range of the grappling mechanism (100) and trigger closure of the grappling mechanism (100) onto the exhaust nozzle (N),
and wherein the spacecraft docking system (D) is preferably a spacecraft docking system (D) as further recited in claim 2 or 3, in which case the one or more proximity sensors (25) are provided on one or more, in particular each, of the phalange members (12).

7. The spacecraft docking system (D) according to any one of the preceding claims, wherein the inner clamping device comprises an extendable pusher mechanism (300) configured to selectively cooperate with a portion of the interior surface of the exhaust nozzle (N),
wherein the extendable pusher mechanism (300) includes a pusher device (35/35A) that is movable between a retracted non-clamping position and an extended clamping position projecting inside the exhaust nozzle (N),
and wherein the pusher device (35/35A) preferably comprises a bearing element mounted on an extensible member (35), which bearing element includes a support collar (35A) that is configured to be brought into contact with the portion of the interior surface of the exhaust nozzle (N) to exert the clamping action on the exhaust nozzle (N).

8. The spacecraft docking system (D) according to claim 7, wherein the grappling mechanism (100) is configured to perform a soft capture of the target spacecraft (T) upon closure of the grappling mechanism (100),
and wherein the pusher device (35/35A) is controllable to be brought from the retracted non-clamping position to the extended clamping position to exert the clamping action on the exhaust nozzle (N) only after soft capture of the target spacecraft (T) by means of the grappling mechanism (100).

9. The spacecraft docking system (D) according to claim 7 or 8, wherein the extendable pusher mechanism (300) is configured and operable to exert a pushing impulse against the exhaust nozzle (N) following release of the clamping action.

10. The spacecraft docking system (D) according to any one of the preceding claims, wherein the outer and inner clamping devices (100, 300) are configured to jointly clamp a section of the exhaust nozzle (N) downstream of and proximate to a throat of the propulsion engine.

11. A method of capturing and coupling a target spacecraft (T) to a servicing spacecraft (S), the target spacecraft (T) having a propulsion engine, such as an apogee kick motor (AKM) or liquid apogee motor (LAM), with an exhaust nozzle (N) projecting away from the target spacecraft (T), the method comprising the following steps:
- providing the servicing spacecraft (S) with a spacecraft docking system (D) in accordance with any one of the preceding claims;
- manoeuvring the servicing spacecraft (S) to perform a rendezvous with the target spacecraft (T);
- positioning the servicing spacecraft (S) relative to the target spacecraft (T) to bring the exhaust nozzle (N) within operating range of the grappling mechanism (100);
- actuating the grappling mechanism (100) to close onto the portion of the exterior surface of the exhaust nozzle (N); and
- actuating the inner clamping device (300) to bring the inner clamping device (300) into contact with the portion of the interior surface of the exhaust nozzle (N), and thereby exert a clamping action on the exhaust nozzle (N) to establish a rigid connection between the servicing spacecraft (S) and the target spacecraft (T).

12. The method according to claim 11, wherein the spacecraft docking system (D) is a spacecraft docking system (D) as further recited in claim 8,
and wherein docking of the servicing spacecraft (S) onto the target spacecraft (T) is carried out in accordance with the following docking sequence:
(i) positioning the servicing spacecraft (S) relative to the target spacecraft (T) to insert the exhaust nozzle (N) within operating range of the grappling mechanism (100);
(ii) actuating the grappling mechanism (100) to bring the articulated phalange assemblies (10) to the closed configuration and perform closure of the grappling mechanism (100) onto the portion of the exterior surface of the exhaust nozzle (N), resulting in a soft capture of the target spacecraft (T); and
(iii) actuating the extendable pusher mechanism (300) to bring the pusher device (35/35A) to the extended clamping position and exert the clamping action on the exhaust nozzle (N), thereby establishing the rigid connection between the servicing spacecraft (S) and the target spacecraft (T).

13. The method according to claim 11 or 12, wherein the spacecraft docking system (D) is a spacecraft docking system (D) as further recited in claim 2 or 3,
wherein one or more, preferably each, of the phalange members (12) comprises at least one proximity sensor (25) to detect presence of the exhaust nozzle (N) within operating range of the grappling mechanism (100) and trigger closure of the grappling mechanism (100) onto the exhaust nozzle (N),
and wherein the method further comprises, prior to bringing the exhaust nozzle (N) within operating range of the grappling mechanism (100), pre-actuating the articulated phalange assemblies (10) to bring the phalange members (12) to an intermediate position to position each proximity sensor (25) to monitor insertion of the exhaust nozzle (N) within operating range of the grappling mechanism (100).

14. The method according to any one of claims 11 to 13, wherein the spacecraft docking system (D) is a spacecraft docking system (D) as further recited in claim 3,
and wherein actuation of the articulated phalange assemblies (10) includes sensing the force applied by each phalange member (12) onto the exterior surface of the exhaust nozzle (N) and stopping closing motion of the phalange members (12) to prevent the application of excessive force onto the exterior surface of the exhaust nozzle (N).

15. The method according to any one of claims 11 to 14, further comprising release of the servicing spacecraft (S) from the target spacecraft (T) subsequent to docking thereof,
wherein the spacecraft docking system (D) is a spacecraft docking system (D) as further recited in claim 9,
wherein release of the servicing spacecraft (S) from the target spacecraft (T) is carried out in accordance with the following release sequence:
(i) actuating the grappling mechanism (100) to bring the articulated phalange assemblies (10) to the open configuration and release the clamping action on the exhaust nozzle (N);
(ii) operating the extendable pusher mechanism (300) to briefly extend the pusher device (35/35A) beyond the extended clamping position to exert a pushing impulse against the exhaust nozzle (N) and cause separation of the servicing spacecraft (S) and target spacecraft (T); and
(iii) retracting the pusher device (35/35A) to the retracted non-clamping position.
